# EUROPÄISCHE PATENTSCHRIFT

(11) **EP 0 945 311 B1**
(45) Veröffentlichungstag und Bekanntmachung des Hinweises auf die Patenterteilung: **04.05.2005**
(21) Anmeldenummer: 99104089.0
(22) Anmeldetag: 18.03.1999
(51) Int. Cl.: B60R 21/20, B62D 1/04, B60R 16/02

(54) **Aufprall-Schutzvorrichtung**
Crash protection device
Dispositif de protection en cas d'accident

(30) Priorität: 23.03.1998 DE 29805210 U
(43) Veröffentlichungstag der Anmeldung: 29.09.1999
(73) Patentinhaber: TRW Automotive Safety Systems GmbH, 63743 Aschaffenburg (DE)
(72) Erfinder: Bohn, Stephan, 63773 Goldbach (DE); Frisch, Ralph, 63776 Mömbris (DE)
(74) Vertreter: Degwert, Hartmut, Dipl.-Phys.

(56) Entgegenhaltungen:
- EP-A- 0 785 107
- GB-A- 2 270 657
- US-A- 5 239 147

## Beschreibung

Die Erfindung betrifft eine Aufprall-Schutzvorrichtung gemäß dem Oberbegriff des Anspruchs 1.

Derartige Schutzvorrichtungen werden üblicherweise im zentralen Bereich des Lenkrades angeordnet, d. h. oberhalb der Stelle, an der das meist topfartig ausgebildete Lenkrad mit der Lenksäule verbunden ist. Den fahrerseitigen Abschluß bildet dabei eine Modulabdeckung, die optisch und haptisch an die Lenkradumgebung angepaßt ist. Letztere besteht aus einem ein Lenkradskelett nahezu allseitig umgebenden Kunststoff-Schaumkörper, dessen Oberfläche im wesentlichen porenfrei und lederartig ausgebildet ist.

Wird die Modulabdeckung nicht von dem gleichen Hersteller gefertigt, der die Lenkräder herstellt, ist es schwierig, die Oberfläche der Modulabdeckung so auszubilden, daß sie sich optisch und haptisch nicht von der Lenkradumgebung unterscheidet. Diese technischen Schwierigkeiten können weitgehend behoben werden, wenn die Umschäumung der Lenkradskelette und die Herstellung der Modulabdeckungen in einer Hand liegen, wobei dann leicht sichergestellt werden kann, daß die im fertigen Fahrzeug unmittelbar nebeneinander angeordneten Bauteile aus der gleichen Vorproduktcharge hergestellt werden.

In jüngster Zeit drängen die Automobilhersteller allerdings verstärkt auf möglichst kurze Endmontagezeiten, was vielfach nur mit größeren, vormontierten Baueinheiten erreichbar ist. Auch diese Forderungen begünstigen die Herstellung von Lenkrad und Modulabdeckung in einer Hand.

Will man jedoch Schutzvorrichtungen mit Lenkrad, Airbagmodul und Modulabdeckung als Baueinheiten an das Endmontageband liefern, d. h. ein Lenkrad mit integriertem Airbag verwenden, kann das Lenkrad nicht mehr, wie üblich, mittels einer auf die zentrale Lenkradnabe aufgesetzten und auf die Lenksäule aufgeschraubten Mutter montiert werden, weil das eingebaute Airbagmodul einen Zugang zu einer derartig angeordneten Mutter nicht zuläßt. Für diesen Fall müssen daher andere Maßnahmen zur Lenkradbefestigung ergriffen werden.

Ferner ist zu beachten, daß das Airbagmodul selbst aus verschiedenen Bauteilen besteht, die in der Regel von verschiedenen Teilelieferanten gefertigt werden. Soweit Airbagmodule für Lenkräder nicht vom Lenkradhersteller gefertigt werden, umfassen sie als Baueinheit fast immer auch die Modulabdeckung, weil man auch insoweit größere Baueinheiten anstrebt und die Montagezeit auf den Lieferanten abwälzen will.

Zusammenfassend kann man daher feststellen, daß der Wunsch nach größeren Baueinheiten im Hinblick auf kürzere Montagezeiten zwar verständlich ist, daß sich daraus aber andere Probleme ergeben können, die sich nachteilig auswirken, insbesondere deswegen, weil der Automobilhersteller mehr als ihm recht sein kann, von dem Hersteller der Baueinheiten abhängig wird. Wenn er die hier interessierenden Baueinheiten Lenkrad, Airbagmodul und Modulabdeckung von unabhängigen Anbietern beziehen kann, lassen sich unter Umständen Preisvorteile erzielen, die weit höher sind, als der dann erforderliche Mehraufwand bei der Endmontage. Vielfach ist diese Freiheit aber nicht gegeben, weil zumindest Airbagmodul und Modulabdeckung nur als Baueinheit angeboten werden und weil diese Baueinheiten konstruktiv derartig aufeinander abgestimmt sind, daß eine Auftrennung nur mit unvertretbar hohem Aufwand möglich wäre.

Die gattungsgemäße GB-A-2 270 657 zeigt ein Lenkrad mit einem darin eingesetzten Airbagmodul. Ein Gehäuse des Airbagmoduls und eine Modulabdeckung sind über sich parallel zur Lenkradachse erstreckende Montagebolzen am Lenkrad befestigt. In die lenkradseitigen Enden der Montagebolzen sind Schrauben eingedreht, die sich rückwärtig am Lenkrad abstützen. Die Befestigung ist so ausgeführt, daß die Modulabdeckung zusammen mit dem Airbagmodul zur Betätigung einer Hupe heruntergedrückt werden kann. Die erforderliche Rückstellkraft wird durch die Montagebolzen umgebende Spiralfedern bereitgestellt. Das abdeckungsseitige Ende jedes Montagebolzens bildet einen abgeflachten Flansch und ist im Material der Modulabdeckung aufgenommen.

In der EP-A-0 785 107 sind ein Airbagmodul und eine Modulabdeckung in einem Lenkrad fixiert, indem ein Flansch eines Modulgehäuses über Montagebolzen am Lenkrad befestigt ist. Die Modulabdeckung ist direkt mit dem Modulgehäuse verbunden. Der Flansch des Modulgehäuses ist zwischen einem abgeflachten, freien abdeckungsseitigen Ende des Montagebolzens und einer Montagefläche des Lenkrades aufgenommen. Gegen die Rückstellkraft von die Montagebolzen ungebenden Spiralfedern kann die Modulabdeckung zusammen mit dem Airbagmodul zur Hupenbetätigung heruntergedrückt werden.

Es besteht somit die Aufgabe, eine Schutzvorrichtung der eingangs genannten Art vorzuschlagen, bei der Lenkrad, Airbagmodul und Modulabdeckung von unterschiedlichen Herstellern bezogen werden können und bei der diese Teile erst in der Endmontage zusammengefügt werden. Dabei soll selbstverständlich die Endmontage so rasch wie möglich durchgeführt werden können. Außerdem sollen die Baueinheiten im Montageendzustand verläßlich miteinander verbunden sein, so daß die bei der Auslösung eines Airbags auftretenden "Schußkräfte" problemlos aufgenommen werden können. Schließlich soll die gesuchte Lösung auch alle anderen konstruktiven Forderungen erfüllen und insbesondere haptisch und optisch keine Wünsche offen lassen.

Zur Lösung dieser Aufgabe werden die Merkmale des Anspruchs 1 vorgeschlagen.

Dabei sind die Montagebolzen zweckmäßigerweise ein Teil der Baueinheit der Modulabdeckung, die bei der Endmontage angebracht wird, nachdem das Airbagmodul bereits im Lenkrad angeordnet ist. Dabei können die Montagebolzen gleichzeitig zur Verbindung des Airbagmoduls mit dem Lenkrad benutzt werden.

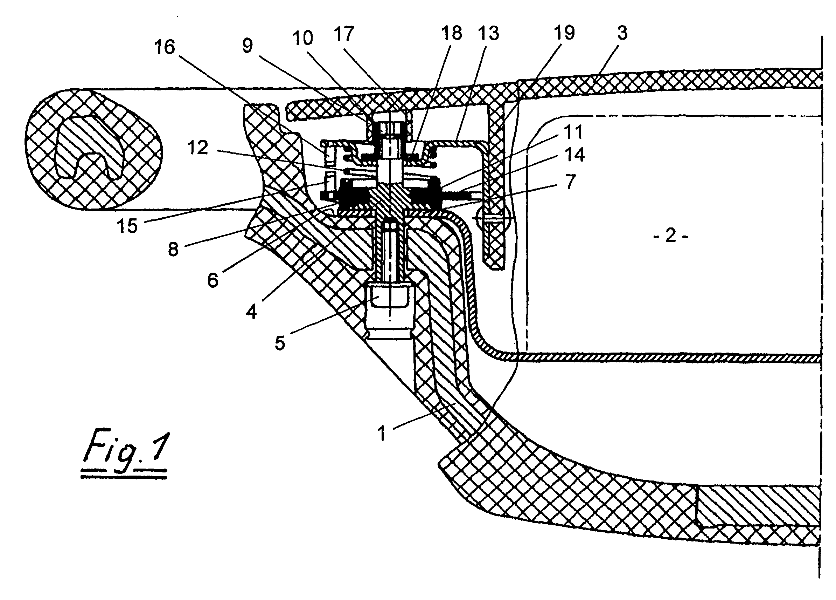

Zweckmäßige Ausgestaltungen des Erfindungsgedankens sind in den Unteransprüchen beschrieben. Weitere Einzelheiten werden anhand des in Fig. 1 dargestellten Ausführungsbeispiels näher erläutert.

Fig. 1 zeigt einen vertikalen Schnitt durch ein halbes Lenkrad mit einer Befestigungsstelle, die die eigenständigen Baueinheiten Lenkrad 1, Airbagmodul 2 und Modulabdeckung 3 in der Montageendstellung wiedergibt.

Zentrales Bauteil der Befestigungsstelle ist ein Montagebolzen 4, der lenkradseitig eine Bohrung mit Innengewinde aufweist, in die ein Bolzen 5 eingeschraubt ist, der sich rückseitig am Lenkrad 1 abstützt. Am fahrerseitigen Ende des Montagebolzens 4 ist ein Außengewinde mit Endanschlag vorgesehen, auf das ein Befestigungsmittel 10 aufgeschraubt ist. Letzteres bildet gleichzeitig eine Positioniereinrichtung für die Modulabdeckung, die mit Ausnehmungen 17 versehen ist, die auf die Befestigungsmittel 10 endseitig aufsteckbar sind. Die eigentliche Befestigung der Abdeckung 3 mit dem Montagebolzen 4 erfolgt über Montageflansche 13, die zwischen den aufschraubbaren Befestigungsmitteln 10 und einem etwa auf halber Länge am Montagebolzen 4 ausgebildeten radialen Flansch 8 zusammen mit einem Federelement 12, einer Scheibe 11 aus Isoliermaterial und einem Träger 14 für den Pluskontakt 15 einer Hupbetätigung eingespannt ist. Der Gegenkontakt 16 ist am Montageflansch 13 angebracht. Zwischen dem Befestigungsmittel 10 und dem Montageflansch 13 ist noch eine Scheibe 18 aus geräuschdämpfendem Material angeordnet.

Die Baueinheit Modulabdeckung 3 wird folgendermaßen hergestellt. Zunächst werden die Scheibe 11 aus Isoliermaterial mit dem eingebetteten Träger 14 für den Pluskontakt 15 auf den Montagebolzen 4 aufgesetzt. Danach werden das Federelement 12 und der Montageflansch 13 sowie die Scheibe 18 aufgesetzt und durch das Befestigungsmittel 10 mit dem Montagebolzen 4 verbunden, das auf das abdeckungsseitige Ende 9 des Montagebolzens 4 aufgeschraubt wird. Anschließend wird die Modulabdeckung aufgesteckt und über einen in Richtung Lenkrad 1 weisenden, umlaufenden Steg 19 mit dem Montageflansch 13 verbunden. Im dargestellten Fall ist eine Nietverbindung vorgesehen. Zur Baueinheit Modulabdeckung 3 gehören demnach alle Teile, die im Befestigungsbereich oberhalb des Flansches 8 am Montagebolzen 4 dargestellt sind.

Die Baueinheit Airbagmodul 2 besteht im wesentlichen aus einem Gasgenerator mit Zünder und einem Gassack, die unterschiedlich ausgeführt sein können und daher nur durch eine Umrißlinie angedeutet sind. Zur Baueinheit Airbagmodul 2 gehört auf jeden Fall noch ein Gehäuse, an dem Montageflansche 7 ausgebildet oder angebracht sind. Diese weisen jeweils ein Durchgangsloch für den Montagebolzen auf.

Nachdem das Airbagmodul 2, wie dargestellt, so in das Lenkrad eingelegt ist, daß die Durchgangsbohrungen in den Montageflanschen 7 mit den Durchgangsbohrungen für den Montagebolzen 4 im Lenkrad 1 fluchten, wird die Baueinheit Modulabdeckung mit dem Montagebolzen eingesetzt, wobei die Montageflansche 7 zwischen den Flanschen 8 der Montagebolzen 4 und den Montageflächen 6 am Lenkrad 1 eingespannt werden. Nach dem Einschrauben der Bolzen 5 in den Montagebolzen 4 sind alle drei Baueinheiten fest miteinander verbunden.

Diese Art der Aufteilung einer Schutzvorrichtung in drei eigenständige Baueinheiten und deren Verbindung untereinander mittels Montagebolzen gemäß dargestelltem Ausführungsbeispiel ist günstig für solche Ausführungsformen, bei denen die Modulabdeckung 3 zur Betätigung der Hupkontakte 15 und 16 in Richtung der Lenkradachse relativ zum Lenkrad beweglich angeordnet werden muß.

Mit der vorgeschlagenen Aufteilung der Aufprall-Schutzvorrichtung in drei unabhängige Baueinheiten hat der Automobilhersteller die Freiheit, jede der drei Baueinheiten von einem anderen Hersteller zu beziehen. Von besonderer Bedeutung ist in diesem Zusammenhang, daß er Airbagmodule bei allen Anbietern anfragen kann, unabhängig davon, ob diese auch Lenkräder und/oder Modulabdeckungen herstellen können oder wollen. Dies kann für den Automobilhersteller insbesondere dann von Vorteil sein, wenn er zwar die Baueinheiten Lenkrad und Modulabdeckung vom Hersteller A beziehen will, für die Airbagmodule aber auf den Hersteller B zurückgreifen möchte. Auf diese Weise kann er eine optimale haptische und optische Abstimmung der Oberflächen von Modulabdeckung und Lenkradumgebung mit völliger Freizügigkeit bei der Beschaffung der Airbagmodule kombinieren. Der Erfindungsgedanke läßt es aber auch zu, daß Modulabdeckungen von einem dritten Hersteller C bezogen werden, wenn die Baueinheiten Lenkrad und Airbagmodul von verschiedenen Herstellern A und B geliefert werden.

## Patentansprüche

1. Aufprall-Schutzvorrichtung für Fahrer von Kraftfahrzeugen mit
einem Lenkrad (1),
einem Airbagmodul (2) mit einem Gehäuse, das wenigstens einen Montageflansch (7) aufweist,
und einer Modulabdeckung (3), die zur Betätigung der Hupe um einen Kontaktabstand in Richtung auf das Lenkrad (1) zu verschieblich ist und die mittels Federelementen (12) in Gegenrichtung vorgespannt ist,
wobei Lenkrad (1), Airbagmodul (2) und Modulabdeckung (3) aus eigenständigen Baueinheiten bestehen und an der Modulabdeckung (3) wenigstens zwei sich parallel zur Lenkradachse erstreckende Montagebolzen (4) angebracht sind, die zur Befestigung der Modulabdeckung (3) und des Airbagmoduls (2) am Lenkrad (1) ausgebildet sind und die mit sich auf der Rückseite des Lenkrades (1) abstützenden Befestigungsmitteln (5) zusammenwirken,
**dadurch gekennzeichnet, daß** das Airbagmodul (2) über den wenigstens einen Montageflansch (7) und wenigstens einen Montagebolzen (4) so am Lenkrad (1) befestigt ist, daß es sich bei der Verschiebung der Modulabdeckung (3) zur Betätigung der Hupe gegenüber dem Lenkrad (1) nicht bewegt.

2. Schutzvorrichtung nach Anspruch 1, **dadurch gekennzeichnet, daß** die Montagebolzen (4) lenkradseitig ein Innengewinde aufweisen, in die sich mit ihren Köpfen auf der Rückseite des Lenkrades (1) abstützende Bolzen (5) einschraubbar sind.

3. Schutzvorrichtung nach Anspruch 1, **dadurch gekennzeichnet, daß** die Montagebolzen (4) abdeckungsseitig ein Außengewinde aufweisen, auf die Befestigungsmittel (10) aufschraubbar sind.

4. Schutzvorrichtung nach einem der Ansprüche 1 bis 3, **dadurch gekennzeichnet, daß** auf der Vorderseite des Lenkrades (1) wenigstens zwei Montageflächen (6) ausgebildet sind, auf denen in montiertem Zustand die Montageflansche (7) des Airbagmoduls (2) aufliegen.

5. Schutzvorrichtung nach Anspruch 4, **dadurch gekennzeichnet, daß** die Montagebolzen (4) einen radial vorstehenden Flansch (8) aufweisen, der in montiertem Zustand auf dem Montageflansch (7) des Airbagmoduls (2) aufliegt und ein Widerlager für die auf der Rückseite des Lenkrades (1) vorgesehenen Befestigungsmittel (5) bildet.

6. Schutzvorrichtung nach einem der vorhergehenden Ansprüche, **dadurch gekennzeichnet, daß** auf das abdeckungsseitige Ende (9) der Montagebolzen (4) ein Befestigungsmittel (10) aufschraubbar ist und daß zwischen dem Flansch (8) des Montagebolzens (4) und dem Befestigungsmittel (10) eine Scheibe (11) aus Isoliermaterial, eine Schraubenfeder (12) und ein Montageflansch (13) der Modulabdeckung (3) eingespannt sind.

7. Schutzvorrichtung nach Anspruch 6, **dadurch gekennzeichnet, daß** in die Scheibe (11) aus Isoliermaterial ein Träger (14) für den Pluskontakt (15) eingebettet ist und daß der Gegenkontakt (16) am Montageflansch (13) der Modulabdeckung (3) ausgebildet ist.

8. Schutzvorrichtung nach Anspruch 6 oder 7, **dadurch gekennzeichnet, daß** die aufschraubbaren Befestigungsmittel (10) endseitig für den Steckeingriff in Ausnehmungen (17) der Modulabdeckung (3) ausgebildet sind.

9. Schutzvorrichtung nach Anspruch 6 oder 7, **dadurch gekennzeichnet, daß** die vorderen Enden der Montagebolzen (4) über die Befestigungsmittel (10) vorstehen und für das Aufstecken von Ausnehmungen in der Modulabdeckung (3) ausgebildet sind.

10. Schutzvorrichtung nach einem der Ansprüche 6 bis 9, **dadurch gekennzeichnet, daß** zwischen dem Montageflansch (13) der Modulabdeckung (3) und den aufschraubbaren Befestigungsmittel (10) eine Scheibe (18) aus geräuschdämpfendem Material angeordnet ist.

11. Schutzvorrichtung nach einem der Ansprüche 6 bis 10, **dadurch gekennzeichnet, daß** die Modulabdeckung (3) aus Kunststoff besteht und einen in Richtung Lenkrad (1) weisenden, umlaufenden Steg (19) aufweist, an dem metallische Montageflansche (13) der Modulabdeckung (3) befestigt sind.

## Claims

1. An impact protection device for motor vehicle drivers, comprising
a steering wheel (1),
an air bag module (2) having a housing including at least one mounting flange (7),
and a module cover (3) which, for actuation of the horn, is adapted to be shifted towards the steering wheel (1) by a contact distance and which is pretensioned in the opposite direction by means of spring elements (12),
the steering wheel (1), the air bag module (2), and the module cover (3) consisting of independent constructional units, and at least two mounting studs (4) being fitted to the module cover (3) which extend parallel to the steering wheel axis and which are configured to secure the module cover (3) and the air bag module (2) to the steering wheel (1), and which cooperate with fastening means (5) supported at the rear side of the steering wheel (1),
**characterized in that** the air bag module (2) is secured to the steering wheel (1) by means of the at least one mounting flange (7) and at least one mounting stud (4) in such a way that the air bag module (2) does not move in relation to the steering wheel (1) when the module cover (3) is shifted for actuation of the horn.

2. The protection device as set forth in claim 1, **characterized in that** each mounting stud (4) has on the side of the steering wheel a female thread into which a bolt (5) can be screwed which has a head supported at the rear side of the steering wheel (1).

3. The protection device as set forth in claim 1, **characterized in that** the mounting studs (4) have on the cover side a male thread onto which fastening means (10) can be screwed.

4. The protection device as set forth in any of claims 1 to 3, **characterized in that** at least two mounting surface areas (6) are configured on the front side of the steering wheel (1), the mounting flanges (7) of the air bag module (2) resting on the mounting surface areas in the fitted condition.

5. The protection device as set forth in claim 4, **characterized in that** the mounting studs (4) each have a radially protruding flange (8) which in the fitted condition rests on the mounting flange (7) of the air bag module (2) and constitutes an abutment for the fastening means (5) provided at the rear side of the steering wheel (1).

6. The protection device as set forth in any of the preceding claims, **characterized in that** a fastening means (10) can be screwed onto the end (9) of the mounting studs (4) on the cover side and that a washer (11) made of insulating material, a coil spring (12) and a mounting flange (13) of the module cover (3) are clamped in place between the flange (8) of the mounting stud (4) and the fastening means (10).

7. The protection device as set forth in claim 6, **characterized in that** a support (14) for the positive contact (15) is embedded in the washer (11) of insulating material and that the opposite contact (16) is configured on the mounting flange (13) of the module cover (3).

8. The protection device as set forth in claim 6 or 7, **characterized in that** the screw-mountable fastening means (10) are configured at their end for plug-in engagement in recesses (17) of the module cover (3).

9. The protection device as set forth in claim 6 or 7, **characterized in that** the front ends of the mounting studs (4) protrude beyond the fastening means (10) and are configured for the mounting thereon of recesses in the module cover (3).

10. The protection device as set forth in any of claims 6 to 9, **characterized in that** a washer (18) made of a noise-dampening material is disposed between the mounting flange (13) of the module cover (3) and the screw-mountable fastening means (10).

11. The protection device as set forth in any of claims 6 to 10, **characterized in that** the module cover (3) is made of plastics and comprises a surrounding web (19) which points towards the steering wheel (1) and to which metallic mounting flanges (13) of the module cover (3) are secured.

## Revendications

1. Dispositif de protection contre des impacts pour conducteurs de véhicules, comportant
un volant de direction (1),
un module d'air bag (2) avec un boîtier qui présente au moins une bride de montage (7),
et un couvercle de module (3) qui, pour actionner le klaxon, peut être déplacé d'une distance de contact en direction du volant de direction (1) et qui est précontraint en direction opposée au moyen d'éléments ressorts (12),
le volant de direction (1), le module d'airbag (2) et le couvercle de module (3) étant constitués par des unités de constructions autonomes, et au moins deux boulons de montage (4) qui s'étendent parallèlement à l'axe du volant de direction étant montés sur le couvercle de module (3), lesquels sont réalisés pour fixer le couvercle de module (3) et le module d'airbag (2) sur le volant de direction (1) et coopèrent avec des moyens de fixation (5) qui prennent appui sur la face postérieure du volant de direction (1),
**caractérisé en ce que** le module d'airbag (2) est fixé sur le volant de direction (1) par ladite au moins une bride de montage (7) et par au moins un boulon de montage (4), de telle sorte que lorsque le couvercle de module (3) est déplacé pour actionner le klaxon, il ne bouge pas par rapport au volant de direction (1).

2. Dispositif de protection selon la revendication 1, **caractérisé en ce que** les boulons de montage (4) présentent, côté volant de direction, un taraudage dans lequel peuvent être vissés des boulons (5) qui prennent appui avec leurs têtes sur la face postérieure du volant de direction (1).

3. Dispositif de protection selon la revendication 1, **caractérisé en ce que** les boulons de montage (4) présentent, côté couvercle, un filetage sur lequel les moyens de fixation (10) peuvent être vissés.

4. Dispositif de protection selon l'une des revendications 1 à 3, **caractérisé en ce que** sur la face antérieure du volant de direction (1) sont réalisées au moins deux surfaces de montage (6) sur lesquelles reposent les brides de montage (7) du module d'airbag (2) à l'état monté.

5. Dispositif de protection selon la revendication 4, **caractérisé en ce que** les boulons de montage (4) présentent une bride (8) faisant saillie radialement qui repose sur la bride de montage (7) du module d'airbag (2) à l'état monté et qui forme un contre-appui pour les moyens de fixation (5) prévus sur la face postérieure du volant de direction (1).

6. Dispositif de protection selon l'une des revendications précédentes, **caractérisé en ce que** sur l'extrémité (9), côté couvercle, du boulon de montage (4) peut être vissé un moyen de fixation (10) et **en ce qu'**entre la bride (8) du boulon de montage (4) et le moyen de fixation (10) sont serrés un disque (11) en matériau isolant, un ressort hélicoïdal (12) et une bride de montage (13) du couvercle de module (3).

7. Dispositif de protection selon la revendication 6, **caractérisé en ce que** dans le disque (11) en matériau isolant est noyé un support (14) pour le contact positif (15) et **en ce que** le contact opposé (16) est réalisé sur la bride de montage (13) du couvercle de module (3).

8. Dispositif de protection selon la revendication 6 ou 7, **caractérisé en ce que** les moyens de fixation (10) vissables sont réalisés, côté extrémité, pour l'engagement par enfichage dans des évidements (17) du couvercle de module (3).

9. Dispositif de protection selon la revendication 6 ou 7, **caractérisé en ce que** les extrémités antérieures des boulons de montage (4) font saillie au-delà des moyens de fixation (10) et sont réalisés pour attacher des évidements dans le couvercle de module (3).

10. Dispositif de protection selon l'une des revendications 6 à 9, **caractérisé en ce qu'**un disque (18) en matériau amortissant les bruits est agencé entre la bride de montage (13) du couvercle de module (3) et les moyens de fixation (10) vissables.

11. Dispositif de protection selon l'une des revendications 6 à 10, **caractérisé en ce que** le couvercle de module (3) est en matière plastique et présente une baguette (19) périphérique orientée en direction du volant de direction (1) et sur laquelle sont fixées des brides de montage (13) métalliques du couvercle de module (3).
